Europäisches Patentamt

European Patent Office

Office européen des brevets

(11) Veröffentlichungsnummer: **0 154 821 B1**

(12) **EUROPÄISCHE PATENTSCHRIFT**

(45) Veröffentlichungstag der Patentschrift: **02.05.91**

(51) Int. Cl.5: **G01V 1/40**

(21) Anmeldenummer: **85101514.9**

(22) Anmeldetag: **13.02.85**

(54) Akustische Messvorrichtung zur Untersuchung der Permeabilität und Klüftigkeit von Gesteinen im durchteuften Gebirge.

(30) Priorität: **22.02.84 DE 3406445**

(43) Veröffentlichungstag der Anmeldung:
**18.09.85 Patentblatt 85/38**

(45) Bekanntmachung des Hinweises auf die
Patenterteilung:
**02.05.91 Patentblatt 91/18**

(84) Benannte Vertragsstaaten:
**AT BE CH DE FR GB IT LI LU NL SE**

(56) Entgegenhaltungen:
**GB-A- 750 976**
**US-A- 3 050 151**

(73) Patentinhaber: **Husten, Peter F. Dipl.-Geophys.**

**CH-9548 Jakobstal(CH)**

(72) Erfinder: **Husten, Peter F. Dipl.-Geophys.**

**CH-9548 Jakobstal(CH)**

(74) Vertreter: **Riebling, Peter, Dr.-Ing., Patentanwalt**
**Rennerle 10, Postfach 31 60**
**W-8990 Lindau/B.(DE)**

## Beschreibung

Die Erfindung betrifft eine akustische Meßvorrichtung nach dem Oberbegriff des Patentanspruchs 1. Eine derartige Meßvorrichtung ist beispielsweise mit dem Gegenstand der GB-PS 750 976 bekannt geworden. Ein ähnlicher Stand der Technik ergibt sich auch aus der Veröffentlichung Hubert Guyod and Lemay E. Schane: Geophysical Well Logging; Vol. I; Hubert Guyod, Houston, Texas, USA, 1969.

Bei dem bekannten Verfahren ist der Sender in beträchtlichem Abstand vom Empfänger angeordnet. Die Verfahren sind als eine Refraktions-Konfiguration zur Registrierung des Ersteinsatzes der schnellsten Welle, d.h. der Kompresionswelle und der Scherwelle, geplant. Diese Verfahren eignen sich nicht zur direkten Analyse von später eintreffenden Impulsen aus hauptsächlich folgenden Gründen: Der vom Sender abgestrahlte Sende-Impuls trifft auf die Bohrlochwandung auf und spaltet sich dort in einem ersten Wellenanteil auf, der über das Spülmedium zum Empfänger läuft. Der zweite Wellenanteil trifft auf die Bohrlochwandung auf und läuft als refraktierte Welle (das bekannte Nutzsignal) zum Empfänger. Ein dritter Wellenzug dringt durch die Bohrlochwandung hindurch in das umliegende Gestein, trifft dort auf Diskontinuitäten des Gesteins, wo Echosignale ausgelöst werden, die über das Gestein wiederum in das Bohrloch zurückgestrahlt werden und vom Empfänger empfangen werden. Das Empfangssignal des entfernt vom Sender angeordneten Empfängers ist also ein Frequenzgemisch verschiedenartiger, gepulster, nicht linearer Signale, deren Analyse sehr schwierig ist.

Das Empfangssignal besteht nämlich aus einzelnen, einander überlagerten Pulsgruppen, bei denen eine Fourier-Analyse nicht möglich ist. Zur Erkennung und Erfassung der Permeabilität und der Klüftigkeit von Gesteinen im durchteuften Gebirge interessiert aber im wesentlichen nur ein einziger Wellenzug, der nachfolgend als Rohrwelle (tube wave) bezeichnet wird. Diese gesuchte Rohrwelle (Nutzsignal) ist dem empfangenen Pulssignal überlagert, was dessen Erkennung außerordentlich erschwert. Das empfangene Frequenzgemisch besteht also im wesentlichen aus vier verschiedenen Wellentypen, nämlich einer Kompressionswelle, einer Scher- oder Transversalwelle, einer Raleigh-Welle und der gesuchten Rohrwelle. Ihrem Zweck entsprechend benutzen die bekannten Refraktions-Verfahren nur hohe Schallfrequenzen und radiale Transducer als Sender und Empfänger. Da nur Ersteinsätze als ungestörtes Nutzsignal gesehen werden, registriert man nur etwa 5 Millisekunden der empfangenen Wellenzüge.

Die vorliegende Erfindung hat sich die Aufgabe gestellt, eine Meßvorrichtung der eingangs genannten Art so weiterzubilden, daß die Rohrwelle (Nutzsignal) genauer erfassbar ist und das Meßverfahren hierdurch sicherer und aussagekräftiger wird.

Zur Lösung der gestellten Aufgabe sieht die Erfindung die Merkmale des kennzeichnenden Teils des Patentanspruchs 1 vor.

Mit der gegebenen technischen Lehre wird ein vollständig neuer Weg beschritten, denn nach der vorliegenden Erfindung ist es jetzt vorgesehen, daß der Abstand zwischen Sender und Empfänger effektiv Null ist. Man verwendet also eine Meßsonde mit Null-Spreizung, wobei ein Schallwellen- oder Druckpuls-Sender und ein Empfänger für Schallwellen oder Druckpulse oder durch diese verursachte Sekundär-Effekte im wesentlichen gleichen Punkt der Meßsonde angebracht sind.

Selbstverständlich sind Abweichungen von dem Ideal des gemeinsamen Bezugs- (Null-)Punktes für Sender und Empfänger im Rahmen der vorliegenden Erfindung eingeschlossen. Als Obergrenze darf jedoch der Abstand zwischen Sender und Empfänger nicht mehr als die halbe Wellenlänge des im Spülmedium (z.B. Wasser) gesendeten Signals überschreiten. Der Vorteil der vorliegenden Meßvorrichtung besteht darin, daß man nach dem Empfang der ersten Reflektionswelle, die unmittelbar durch Abstrahlung des Sendesignals von der Bohrlochwand eingeht, dann alle weiteren Signale als Nutzsignale auffasst, die unmittelbar der Verwertung zugeführt werden können. Bei dem vorher bekannten Verfahren war dies nicht möglich, weil man das nach dem Sendesignal empfangene Echosignal als Gemisch der vorher genannten vier Wellentypen empfangen hatte, in denen das Nutzsignal (Rohrwelle) nur sehr verschwommen und unscharf enthalten war.

Mit der erfindungsgemässen Meßvorrichtung wird also ein wesentlicher Vorteil damit erzielt, daß es nun möglich ist, die Rohrwelle nun wesentlich genauer zu erfassen.

Die wesentlichen Eigenschaften dieses Gerätes im Vergleich zu den bekannten akustischen Meßgeräten sind:

| Sender/Empfänger | Erfindung | bekannte Verfahren |
|---|---|---|
| Abstand | effektiv null | 90,150,240,300,360 cm (3,5,8,10,12 Fuss) |
| Frequenzbereich | 10 hertz bis 10 Kilo-hertz | 20 bis 50 Kilo-hertz |
| Potential-Messung | möglich, aber nicht Bedingung | keine und auch nicht möglich |

| | Erfindung | bekannt |
|---|---|---|
| Methode | Reflektion | Refraktion |
| Strahlrichtung | axial | radial |
| E/S-Abstand | $\pm$ null | Meter-Bereich |
| Frequenz | unter 10 kHz | über 10 kHz |
| Meßzeit | bis Sekunden | einige Millisekunden |
| Potential-Messung | möglich | keine |

Nur die Kombination der ersten fünf Eigenschaften führt zu einem durch Interferenzen, Vor- und Nachläufer ungestörten Echolog von Rohrwellen, was wesentlich für die Ortung ist.

Andere Kombinationen unter Beibehaltung des "Null"-Abstandes führen zu einem Echolog von zusätzlichen Reflektionen, z.B. aus dem Gebirge, die wichtige Auskünfte erbringen, aber doch zweitranging sind.

Bei der Vergrößerung des E/S-Abstandes leidet die Schärfe und die Tiefenauslösung der Registrierung:
- Die Schärfe wird verschlechtert durch Interferenz des ausgehenden mit dem eingehenden Signal. Auch die refraktierten und unerwünschten Kompressionswellen würden stören.
- Die Tiefenauslösung, d.h. die Genauigkeit, mit der die Lage einer Kluft bestimmt werden kann, ist $(z + 2^* a)$; z = Kluftmächtigkeit (Dicke); a = E/S-Abstand. Die typische V-Struktur in den Sonogrammprofilen weitet sich zu einem mehr und mehr verschmierten U mit zunehmendem E/S-Abstand.
- Grundsätzlich ist ein rein qualitatives Auffinden von starken Klüften auch mit einem E/S-Abstand von mehr als einer halben Wellenlänge möglich.
- Zur numerischen Veranschaulichung:

Rohrwellengeschwindigkeiten liegen zwischen 1000 und 1500 m/sec; Rohrwellen-Echo-Logs werden nach bisherigen Erfahrungen am besten im unteren Kilo-Hertz-Bereich (500-5000 Hz) gefahren. Die entsprechende Wellenlänge (L = V/F) liegt im Bereich eines Meters. Die Industrie erwartet Teufengenauigkeiten von weniger als (30 cm) (einem Fuß). Folgt: E-S muß klein sein.

Das im folgenden beschriebene Gerät ist eine breitbandige Sonde mit Null-Spreizung (Abstand zwischen E + S = O) zur Registrierung von Echo- und anderen Sekundärwellen, unter anderem von Flüssigkeits- und Rohrwellen. Letztere entstehen als Folge einer Druckwelle durch Wechselwirkung zwischen dem Gestein, der das Gestein sättigenden Flüssigkeit und der Flüssigkeit im Bohrloch. Die mit dieser Meßeinrichtung erzielbaren Meßergebnisse sind Wellengeschwindigkeit, Phasenbeziehungen, Frequenz und Amplitude; sie erlauben qualitative und quantitative Beurteilungen der Gebirgs-(Formations-)eigenschaften:
- Mechanische Moduli,
- Permeabilität

neben den bekannten, akustischen Methoden zur Bestimmung der Gesteins-Porösität, der Kompressions- und Scherwellengeschwindigkeiten, wie auch der mechanischen Moduli.

Definitionen

Im folgenden werden bezeichnet als

| | |
|---|---|
| Meß-Sonde | das hier beschriebene Gerät. |
| Meßwagen | ( + skid) -Surface-Kontrolle einschließlich Winde |
| Vermessungskabel | mechanische und elektrische Verbindung zu Bohrlochsonden |
| Bohrloch | + Tunnel + Kaverne, etc. |
| Spülung | + Wasser/Öl/Gas |

Die Meßsonde wird mit einem Vermessungskabel mechanisch und elektrisch verbunden und mittels der Kabelwinde des Meßwagens in ein Bohrloch eingefahren. Die mechanische und elektronische Kontrolle der Funktionen der Echosonde befinden sich in dem Meßwagen. Wie für Bohrlochmessungen üblich, beinhaltet die Meßeinrichtung der Echosonde elektronische Schaltungen zur Stromversorgung, Meßverstärker, Kabelvor- und nachverstärker und eine Synchronisationsschaltung.

Für die folgende Beschreibung stelle man sich die Echosonde zentriert in einem zylindrischen, mit Spülung gefüllten Bohrloch vor. Schallsender und Schallempfänger sind so montiert, daß sie den gleichen geometrischen und für die Messung wirksamen Bezugs- oder Nullpunkt haben. Die Meßanordnung kann durch eine Potentialelektrode ergänzt werden, die ebenfalls symmetrisch zu dem gleichen Sonden-Nullpunkt angeordnet wird. Abweichungen von dieser idealen Anordnung dieses Beispiels sind möglich; siehe unten.

Von der Echo-Sonde wird zur Zeit To ein akustischer Druckimpuls oder ein kurzzeitiger Wellenzug mittels eines elektro-mechanischen Wandlers (Sende-Transducers) gesendet. Diese Druckwelle überträgt sich auf die Spülung, die mit dem Transducer direkten hydraulischen Kontakt hat. Diese Druckwelle kann mehr oder weniger eindimensional gerichtet sein und sich als Strahltrichter ausbreiten. Sie kann aber auch in zweidimensionaler Scheibenform gesendet werden oder omnidirektional als etwa reine Kugelwelle.

Ein Teil der gesendeten Druckenergie wird an der Bohrlochwand reflektiert und im Nullpunkt durch den Empfangstransducer zur Zeit Tx registreirt. Die Zeitdifferenz Tx minus To dient zur Berechnung des Bohrlochdurchmessers. Die reflektierte Energie dient zur Bestimmung des Reflektionsindex der Grenzfläche Spülung/Gebirge.

Der Energieanteil, der in das die Bohrung umgebende Gestein eindringt, kann an hierfür geeigneten Unsteitigkeitsflächen im Gebirge reflektiert und vom Empfänger registriert werden, z.B.
- geologischen Schichtgrenzen mit unterschiedlichen Schallgeschwindigkeiten,
- Klüften, geologischen Störungen, etc.

Kontinuierliche Registrierungen solcher Reflektionen lassen häufig die Bestimmung des Einfallens dieser Schicht- oder Störungsflächen zu.

Werden hydraulisch-permeable (sogenannte offene) Klüfte, die auch durch das Bohrloch aufgeschlossen sind, durch die gesendete Druckwelle getroffen, wird außer der möglichen Reflektion eine weitere Druckwelle (Flüssigkeitswellenpuls) in der Flüssigkeit der Kluft ausgelöst. Diese breitet sich mit wesentlich langsamerer Geschwindigkeit innerhalb der Kluft aus und erzeugt in der Schnittfläche Kluft/Bohrloch eine Rohrwelle (Nutzsignal) im Bohrloch, die wiederum vom Empfänger registriert wird. xxx

Ein dritter Teil der gesendeten Schallenergie wird an der Bohrlochwand refraktiert (Grenzwinkel zur totalen Reflexion) und breitet sich entlang der Bohrlochwand im Gebirge aus. Die Refraktionswellen können die vorhergehend beschriebenen reflektierten Wellen, wie auch die flüssigkeitsgekoppelten Rohrwellen, auslösen.

Der Anteil der Schallenergie, der nicht in das Gebirge eindringt, wird als Flüssigkeits- und Rohrwelle in der Spülung entlang der Bohrlochachse übertragen. Der Flüssigkeitsdruck erzeugt fortlaufende Erweiterungen und Verengungen des Bohrlochs (Tube-wave) (Rohrwelle), aber auch eine Druckwelle in der Gebirgsflüssigkeit. Wechselwirkungen zwischen Spülung, Gebirge, Gebirgswasser, bedingen Bohrlochwellen verschiedener Geschwindigkeit, die an Schichtgrenzen, Klüften und permeablen Zonen im Gestein reflektiert werden oder Sekundärwellen auslösen. Diese werden vom Empfänger registriert.

Während der Ausbreitung von Schallwellen in und um Bohrlöcher treten Relativbewegungen zwischen der Gesteinsmatrix · und dem sie benetzenden Poren- (oder Gebirgs-)Wasser auf. Diese verursachen Filtrationspotentiale, die mit einer geeigenten Potentialelektrode registriert werden. Sie hat den gleichen effektiven Nullpunkt wie der akustische Empfänger.

Die Echosonde wird am Vermessungskabel mit etwa konstanter Geschwindigkeit bewegt. Schallimpulse werden in regelmässigen Zeitintervallen, z.B. 0.01 Sekunden bis zu einigen Sekunden, gesendet. Die vom Empfänger wahrgenommenen Wellenzüge werden analog und digital registriert. Diese lassen sich z.B. als Bohrloch-Profile darstellen, die sich mit den in der Seismik üblichen Mitteln interpretieren lassen.

Bohrlochmessungen mit stationärer Sonde sind selbstverständlich möglich.

EP 0 154 821 B1

Durch Anwendung geeigneter mathematisch-analytischer Methoden (elektronische, digitale, graphische und manuelle) lassen sich z.B. folgende Informationen aus den mit der Echosonde registrierten Daten ableiten:

- mittlerer Bohrloch-Durchmesser,
- Reflektionsindex Spülung / Formation,
- Lokalisation von Klüften und permeablen Zonen,
- Klüftigkeit,
- Permeabilitätsindex,
- Gleitmodul,
- Kompressionsmodul,
- Existenz von reflektierenden Flächen im Gebirge; auch solche, die nicht durch das Bohrloch aufgeschlossen wurden.

Die neuartigen Merkmale der Erfindung können wie folgt zusammengefasst werden:

1. Ein Schallwellen- oder Druckpuls-Sender und ein Empfänger für Schallwellen oder Druckpulse oder durch diese verursachte Sekundäreffekte sind im wesentlichen gleichen Punkt angebracht.

1.1. Abweichungen von dem Ideal des gemeinsamen Bezugs-(Null-)Punktes für Sender und Empfänger und der Gleichartigkeit dieser beiden sind eingeschlossen.

1.1.1 Der Abstand zwischen Sender und Empfänger darf eine halbe Wellenlänge des in Wasser gesendeten Signals nicht überschreiten.

1.1.2 Sender und Empfänger mit verschiedenen geometrischen Vorzugsrichtungen ihrer Empfindlichkeit können kombiniert werden, z.B. ein- mit zwei- und/oder drei-dimensionalen Sendern und /oder Empfängern.

1.1.3 Sender und Empfänger verschiedener Arten und Größen können miteinander kombiniert werden.

1.1.4 Sender und/oder Empfänger oder Teile des Senders und/oder Empfängers können asymmetrisch angeordnet werden.

1.1.5 Die Meß-Sonde kann im Bohrloch zentriert, aber auch exzentrisch oder frei pendelnd eingesetzt werden.

1.1.6 Sender und/oder Empfänger oder Teile davon können mittels eines Gleitschuhes an die Bohrlochwand angepresst werden.

1.2 Der Sender kann als ein einziges oder als Kombination mehrerer Schall/Druck erzeugender Elemente ausgeführt werden, z.B.

1.2.1 Piezo-Elementen,

1.2.2 magnetostriktiven Elementen,

1.2.3 mechanischen Geräten und Membranen,

1.2.4 pneumatischen oder hydraulischen Geräten,

1.2.5 Knallfunken

1.2.6 chemischen Reaktionen und Explosionen.

1.3 Der Schallwellen- oder Druckpulsempfänger kann als ein einziges Elemente oder eine Kombination von mehreren Elementen ausgeführt werden,

1.3.1 die Schall/Druck empfindlich sind, z.B.:

1.3.1.1 Piezo-Elemente,

1.3.1.12 magneto-striktive Elemente,

1.3.1.3 mechanische Geräte und Membranen,

1.3.1.4 pneuamtische und hydraulische Geräte - (durch Pumpe kann man einen Druckpuls als Sender erzeugen)

1.3.1.5 elektrische Meßfühler (diff. Kondensatoren, Strain Gauges, etc.), mißt die Deformation einer Empfängerplatte oder -membran

1.3.1.6 optische Erfassung der Bewegung einer Empfängerplatte auf optischem Weg, und photosensitive Spannungsänderung in Acrylglas, Geräte und Meßelemente.

1.3.2 die zur Messung von elektro-kinetischen Potentialen geeignet sind, z.B.:

1.3.2.1 Metallelektroden, z.B. Blei, Eisen, Platin etc.

1.3.2.2 Gas- oder Flüssigkeitselektroden,

1.4 Geeignete Schaltungen ermöglichen den Einsatz des gleichen Druck-Elements als Sender und als Empfänger, z.B.:

1.4.1 Piezo-Elemente,

1.4.2 Membranen mit optischer Registrierung (Verformung Membran wird auf optischem Weg registriert)

1.4.3 hydraulische Geräte mit photo-elektrischer Kopplung (Empfänger mit einem hydraulisch bewegten Kolben, dessen Bewegungsphoto elektrisch erfasst wird)

5

1.5.1 aperiodischer (Sinus, Rechteck etc.) Puls von beliebiger Amplitude,

1.5.2 kurzfristiger Wellenzug verschiedener Länge, Frequenz, Amplitude,

1.5.3 kontinuierlich gesendetes Signal, frequenz- und/oder amplitudenmoduliert,

1.5.4 der durch die natürlichen und durch die Bohrlochverhältnisse gegebene Frequenzbereich liegt zwischen einigen Hertz und unter 100 Kilo-Hertz.

Im folgenden wird die Erfindung anhand von mehreren Ausführungswege darstellenden Zeichnungen näher erläutert.

Es zeigen:

| | |
|---|---|
| Figur 1: | schematisiert gezeichneter Schnitt durch ein Bohrloch mit einer Sonde nach der Erfindung, |
| Figur 2: | gleiche Darstellung wie Figur 1 mit einer anderen Meß-Situation, |
| Figur 3: | vereinfachte Darstellung eines mit der Meß-Sonde nach der Erfindung gewonnenen Meßergebnisses, wobei auf der Abszisse die Tiefe und auf der Ordinate die Laufzeit aufgetragen ist, |
| Figur 4: | Darstellung, wie aus dem Echo-Signal der Meß-Sonde das Meß-Diagramm nach Figur 3 gewonnen wird, |
| Figur. 5.1: | schematisierte Darstellung einer ersten Ausführungsform einer Sende-Empfangseinrichtung, |
| Figur 5.2: | zweite Ausführungsform einer Sende-Empfangseinrichtung, |
| Figur 5.3: | dritte Ausführungsform einer Sende-Empfangseinrichtung, |
| Figur 5.4: | vierte Ausführungsform einer Sende-Empfangseinrichtung, |
| Figur 6: | schematisiert gezeichnete Darstellung einer weiteren Ausführungsform einer Sende-EmpfangsEinrichtung in der Meß-Situationim Bohrloch, |
| Figur 7: | schematisiert gezeichnete Seitenansicht einer weiteren Ausführungsform einer Sende-Empfangseinrichtung, |
| Figur 8: | schematisierte Seitenansicht einer weiteren Ausführungsform durch eine Sende-Empfangseinrichtung mit vorwiegend axialer Strahlungsabgabe, |
| Figur 9: | Schnitt gemäss der Linie IX-IX in Figur 8, |
| Figur 10: | schematisiert gezeichnete Seitenansicht durch eine weitere Sende-Empfangseinrichtung mit vorwiegend radialer Strahlungsabgabe, |
| Figur 10a: | Prinzipschaltbild der Anordnung von Sender und Empfänger, |
| Figur 10b: | zwei weitere Ausführungsbeispiele der Prinzipanordnung von Sender und Empfänger. |

Bei der Beschreibung der Ausführungsbeispiele wird darauf hingewiesen, daß im folgenden nur noch die Situation im Bohrloch beschrieben wird, wobei es mit der Meßsonde nach der Erfindung ebenso möglich ist, die Messungen in entsprechenden Stollen oder Tunnels durchzuführen.

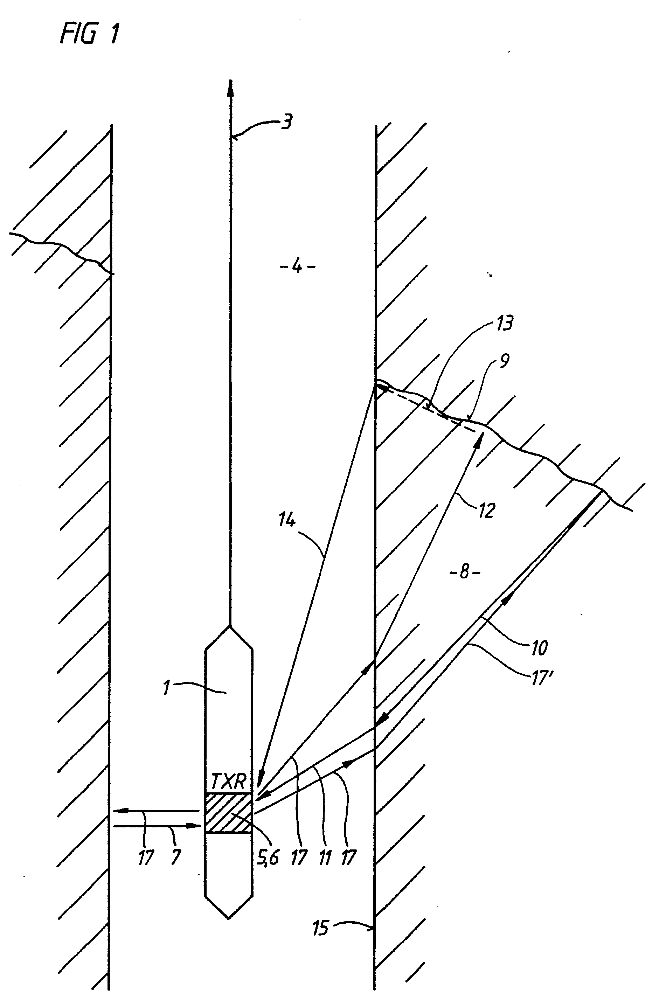

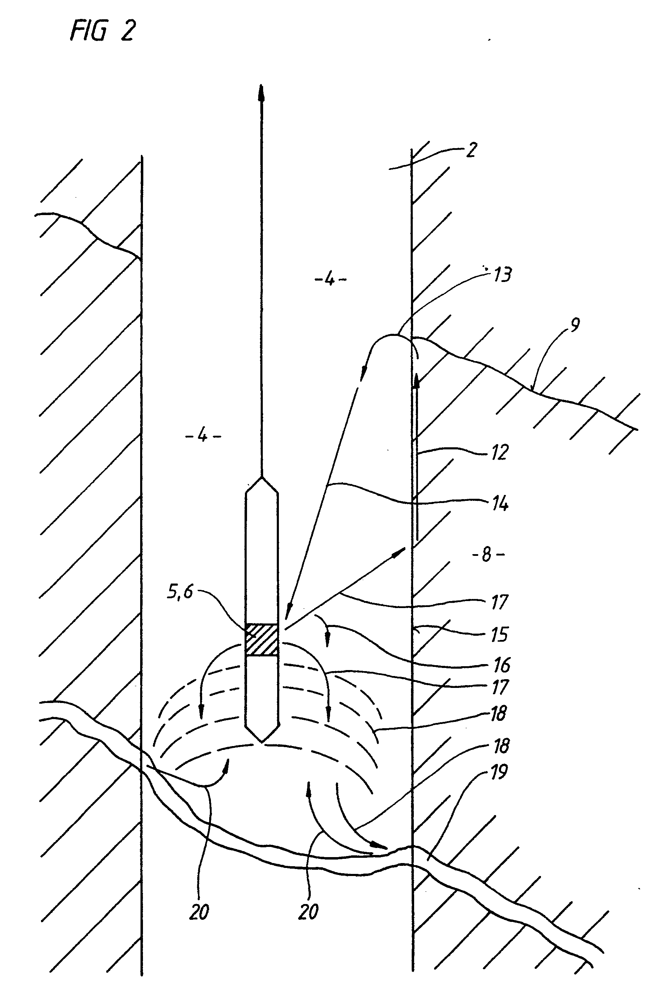

Die Meßvorrichtung nach Figur 1 und Figur 2 kann von der Tiefe Null bis in jede beliebige Tiefe im Bohrloch angewendet werden, d.h. z.B. bis 7000 oder 10000 m Tiefe, was einem Druck von etwa 700 bis 1000 bar entspricht, sofern man als Spülmedium Wasser verwendet.

Bei dem in Figur 1 und 2 gezeigten Bohrloch 2 ist die Meßsonde 1 über ein Kabel 3 zentrisch im Bohrloch abgehängt und taucht in das im Bohrloch 2 befindliche Spülmedium 4. Der hydrostatische Druck steigt pro 8 bis 10 m Tiefe um etwa 1 bar, was von der Art des Spülmediums 4 abhängig ist. Als Spülmedium wird in bekannter Weise eine Schwerspart-Flüssigkeit, Wasser oder eine Bentonit-Spülung verwendet.

Die Temperatur im Bohrloch steigt pro 100 m Tiefe um ca. 3°, wobei bei einer Tiefe von etwa 7000 m eine Temperatur von 200° vorhanden ist. Das Bohrloch nach Figur 1 oder Figur 2 hat zylindrische Form und einen Durchmesser von etwa 25,4 mm (1 Zoll) bis 1778 mm (70 Zoll). Das Kabel 3, welches die von der Meßsonde 1 erzeugten Meßsignale ableitet, wird an die Erdoberfläche geführt und dort in einen nicht näher dargestellten Meßwagen eingeleitet.

Die Meßsonde 1 ist ein zylinderförmiger Druckkörper, der allseitig abgedichtet ist. Er besteht aus Edelstahl, oder einer Messing-Legierung oder aus Aluminium oder vergleichbaren Materialien.

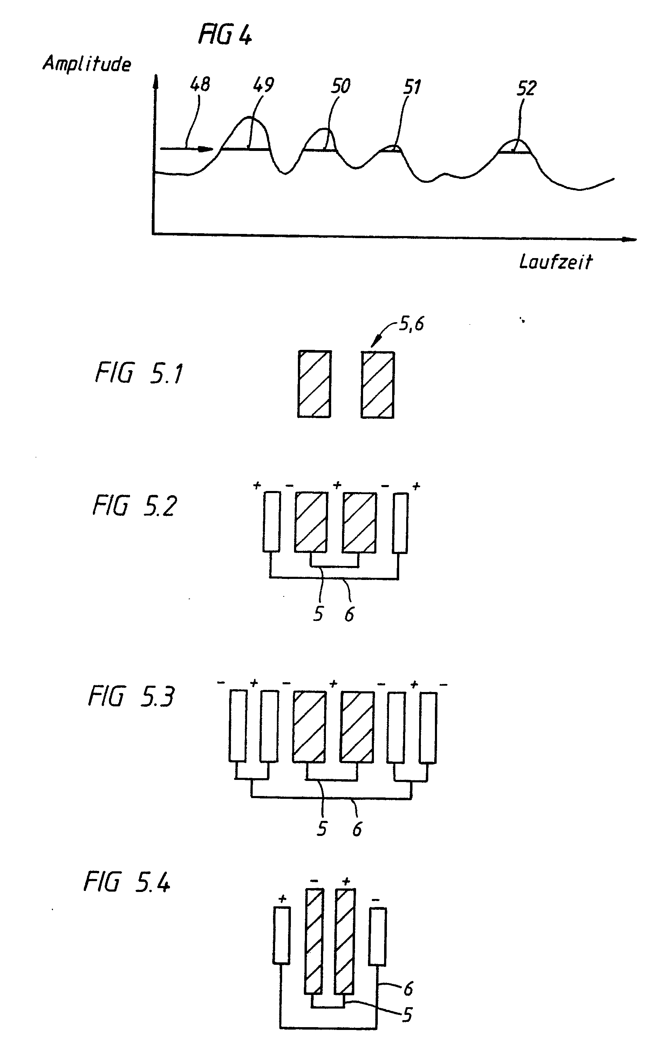

Der in der Meßsonde 1 angebrachte Sender 5 befindet sich in mechanischem Kontakt mit dem Spülmedium 4. Die Kontaktgabe erfolgt beispielsweise dadurch, daß eine Gummimembran am Außenumfang der Meßsonde 1 angebracht ist, hinter der der Sender 5 abedichtet angeordnet ist. Erfindungsgemäß ist an der Stelle des Senders 5 auch der Empfänger 6 angebracht, wobei für die spezielle Ausgestaltung von Sender und Empfänger 5,6 eine Reihe von Ausführungsformen möglich sind (vergl. Figuren 5 bis 10).

6

Der Sender 5 gibt zur Zeit TO einen akustischen Druckpuls in das Spülmedium 4 ab. Dieser Puls breitet sich etwa in Form einer Kugelwelle (Sendewelle 17) im Spülmedium 4 aus und trifft auf die Bohrlochwandung 15. Dort wird ein Teil der Sendewelle 17 reflektiert und kommt als Reflektionssignal 7 zum Empfänger 6 zurück.

Durch Bestimmung des Laufzeitunterschiedes zwischen der Sendewelle 17 und dem Reflektionssignal 7 kann der effektive Durchmesser des Bohrloches erfasst werden.

Die Sendewelle 17 trifft z.B. auf der rechten Seite auf die Bohrlochwandung 15, durchdringt diese und wird in Form einer Sendewelle 17' in der Formation 8 weitergeleitet, bis die Sendewelle 17' auf eine in der Formation 8 vorhandene Kluft 9 der Schichtgrenze auftrifft. Dort wird das Signal reflektiert und es wird ein Reflektionssignal 10 in der Formation 8 gebildet, welches wiederum von außen her kommend in das Bohrloch in Form des Signals 11 eindringt und vom Empfänger 6 erfasst wird.

Ein weiterer Ausbreitungsmodus ergibt sich dadurch, daß die Sendewelle 17 schräg nach oben gerichtet auf die Bohrlochwandung 15 auftrifft, wobei sich in der Formation 8 eine Kompressionswelle 12 bildet, die an der Kluft 9 zu einer Reaktionswelle 13 (Flüssigkeitswelle) konvertiert wird und über die Bohrlochwandung 15 wieder in das Bohrloch 2 eingestrahlt wird. Damit ist eine Rohrwelle 14 entstanden, die als Nutzsignal den Empfänger 6 erreicht und dort erfasst wird.

Kern der vorliegenden Erfindung ist nun, daß die Rohrwelle 14, die von der Permeabilität der Kluft 9 oder der Schichtgrenze abhängt, praktisch ungestört vom Empfänger 6 empfangen wird, weil sie im gewählten Frequenzbereich das stärkste Empfangssignal ist und also das stärkste Nutzsignal für die Erkennung der Kluft 9 oder der Schichtgrenze ist.

Die Energie dieser Rohrwelle 14 ist eine quantitative Anzeige der Größe der Kluft 9.

Ein derartiges Meßverfahren war mit den eingangs genannten, zum Stand der Technik gehörenden Meßverfahren nicht möglich, weil dort die Rohrwelle 14 überdeckt durch die anderen Wellentypen vom Empfänger 6 erfasst wurde. Nun kann man mit der vorgeschlagenen Meßvorrichtung unmittelbar die Permeabilität der Kluft 9 erfassen.

Ein weiteres, wesentliches Nutzsignal ist der Empfang des Reflektionssignals 10, mit dessen Vorhandensein man überhaupt die Existenz der Kluft 9 oder der Schichtgrenze beweisen kann. Je nach der Phasenverschiebung des Reflektionssignals 10 zum Sendesignal 17 kann man über die Bestimmung des Einfallswinkels auch die Lage der Kluft 9 oder der Schichtgrenze bestimmen.

In Figur 2 ist der Grenzfall der Wellenausbreitung im Vergleich zu Figur 1 dargestellt. Dort läuft die von der Sendewelle 17 im Bereich der Bohrlochwandung 15 erzeugte Kompressionswelle 12 in axialer Richtung im Bereich der Formation 8 an der Bohrlochwandung hinauf, wird dort an einer Kluft 9 der Schichtgrenze reflektiert und gelangt als Reaktionswelle 13 wiederum in das Bohrloch 2, wo die Reaktionswelle 13 als Rohrwelle 14 dem Empfänger 6 erreicht. Sobald der Ausfallswinkel der Sendewelle 17 vom Sender aus einen bestimmten Betrag in Pfeilrichtung 16 unterschreitet, kann eine solche Sendewelle 17 zwar noch zur Bohrlochwandung 15 gelangen, diese aber nicht mehr durchdringen.

Die Sendewelle 17 verbleibt dann gemäß dem nach unten gerichteten, gebogenen Pfeil im Spülmedium 4 und bildet dort eine Wellenfront 18, die sich im Bohrloch 2 in axialer Richtung aufgrund ihrer Wechselwirkung mit der Bohrlochwandung 15 bewegt. Diese Wellenfront 18 kann hierbei auf eine durch das Bohrloch geöffnete Kluft 19 oder auf eine permeable Zone auftreffen, wobei diese Kluft durch die Wellenfront 18 "aufgeblasen" wird.

Die Wellenfront 18 reagiert mit der in der Kluft 19 vorhandenen Flüssigkeit, die eine Reaktionswelle bildet, die dem Wellentyp nach als abgewandelte Rohrwelle oder als sekundäre Rohrwelle 20 bezeichnet wird, die nun in Gegenrichtung zur Wellenfront 18 zum Empfänger 6 zurückläuft und dort erfasst wird.

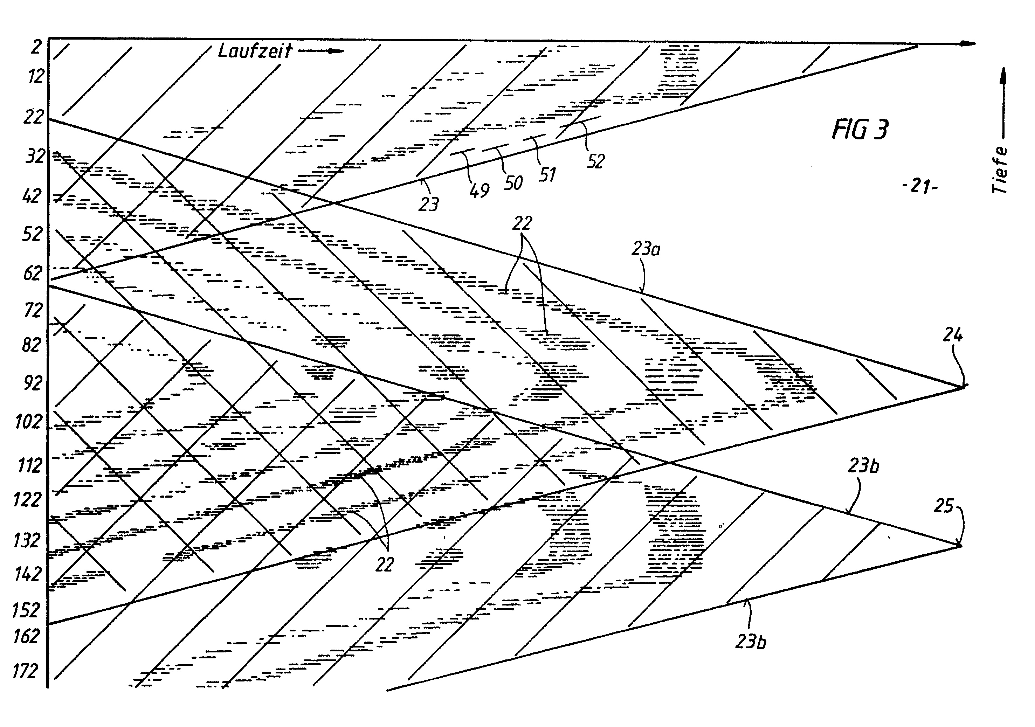

Sofern man die Meßsonde mit konstanter Geschwindigkeit aufwärts bewegt, erhält man das in Figur 3 dargestellte Schaubild.

Auf der Ordinate ist die Tiefe des Bohrloches angegeben, wobei am unteren Bildrand eine geringe Tiefe und am oberen Bildrand die größte Tiefe des Bohrloches verzeichnet ist.

Auf der Abszisse ist die Laufzeit der empfangenen Signale in Millisekunden aufgetragen. Links oben im Abszissen- und Ordinaten-Schnittpunkt ist Null. Die Signale wurden gemäß Figur 4 mit einem Schwellwert-Komparator ausgewertet. In Figur 4 ist auf der Abszisse die Laufzeit eines zu einem bestimmten Zeitpunkt empfangenen Signals und auf der Ordinate die Amplitude dieses Signals angegeben. Alle Signalverläufe, welche die Schwelle 48 nach oben hin überschreiten (also größere Amplitude als die Schwelle 48 haben), werden in Form eines Striches 49-52 vom Computer in Figur 3 eingetragen. In Figur 3 sind in grob schematisierter Darstellung diese Striche 49-52 in stark vergrößerter Form (der besseren Übersicht halber) wiedergegeben. Auf der linken Seite der Ordinate sind in Form von Zahlen die sogenannten Knallgruppen aufgetragen. Die Zahl 2 bedeutet beispielsweise, daß in der betreffenden Tiefe die 9. bis 16. Knallgruppe aufgetragen wurde. Die nummerische Zahl 1 bedeutet, daß acht Einzelknalls abgegeben wurden, deshalb bedeutet die angegebene Zahl 2, daß neun bis sechzehn Einzelknalls im Bereich dieser Zahl abgegeben wurden. Insgesamt sind auf der Zeichnung 172 Knallgruppen aufgezeichnet, d.h. es wurden 172 x 8 Einzelknalls, das sind 1o76 Einzelknalls, abgegeben. Man erkennt ferner V-Linien 22, welche die Einsätze der Rohrwellen 14,2o darstellen. Unten im Bohrloch sieht man den Einsatz einer Kluft 23, der schräg von unten nach oben verläuft. Man erkennt ferner eine weitere Kluft 23a, deren Spitze 24 sich etwa in der Tiefe bei der Blockzahl 82 befindet, während die Spitze 25 einer dritten Kluft 23b sich bei der Blockzahl 122 befindet.

Aus dem Computerausdruck erkennt man also drei sich überlappende Klüfte 23,23a, 23b, deren Formation sofort aus dem Computerausdruck unmittelbar zu entnehmen ist, obwohl sich spät registrierte Einsätze der Rohrwellen-Reflektionen überlappen.

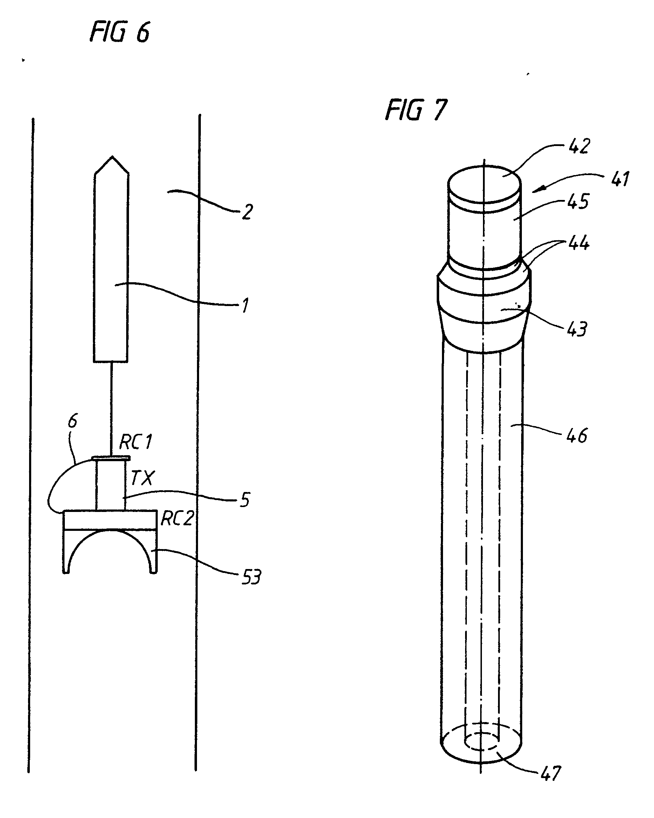

Die Figuren 5.1 bis 5.4 zeigen prinzipielle Anordnungen von Sende-Empfangsschaltungen, während in den Figuren 6 bis 10 die konstruktiven Ausgestaltungen solcher Sende-Empfangsanordnungen dargestellt ist.

Der in Figur 5.1 dargestellte Sender und Empfänger besteht aus zwei Platten, die elektronisch vom Sendebetrieb auf den Empfangsbetrieb und umgekehrt umschaltbar sind.

Figur 5.2 zeigt einen symmetrischen Sender 5, der von einem symmetrischen Empfänger 6 umgeben ist, während Figur 5.3 wiederum eine symmetrische Anordnung von Sender 5 und Empfänger 6 zeigt, wobei der Empfänger 6 hierbei aus vier Platten besteht.

In Figur 5.4 ist angegeben, daß Sender 5 und Empfänger 6 auch unterschiedliche Größen haben können. Im Ausführungsbeispiel sind die Platten des Senders 5 größer als die des Empfängers ausgebildet.

Jede Platte besteht aus einem PTZ-Material, das ist ein piezo-elektrischer Sintestoff aus Metalloxyden. Ebenso ist die Wahl anderer bekannter Materialien für den angegebenen Anwendungszweck möglich.

Eine asymmetrische Anordnung von Sender und Empfänger, wie sie in Figur 5.4 gezeichnet ist, ist bei den anderen Ausführungsbeispielen nach Figur 5.1 bis Figur 5.3 möglich.

Figur 6 zeigt eine weitere asymmetrische Anordnung eines Senders 5 mit einem Empfänger 6. Der Sender 5 wird hierbei durch eine kleinere Empfängerplatte RC1 nach oben hin abgeschlossen, während nach unten hin eine größere Empfängerplatte RC2 den Sender 5 abschließt. Ebenso ist es möglich, die untere Empfängerplatte RC2 durch ein halbrundes Abschlußstück 53 abzuschließen, welches nach unten hin geöffnet ist, wodurch man dem dargestellten Sende-Empfänger 5,6 eine bevorzugte Empfindlichkeit nach unten hin verleiht.

Ein Sender-Empfänger, der mit dem Piezo-Effekt arbeitet, ist in Figur 7 dargestellt. Ein oberer Druckstempel 42 ist mit einem unteren Druckstempel 43 über eine nicht näher dargestellte Druckschraube miteinander verbunden und gegeneinander axial vorgespannt. Der untere Druckstempel 43 ist mit dem darunter angeordneten, an der Stirnseite 47 geöffneten Rohr 46 werkstoffeinstückig verbunden. Aus Dämpfungsgründen kann man das Rohr auch seitlich am Umfang öffnen, z.B. durch Einbringen von Löchern, Schlitzen, Perforierungen und dergleichen. Das Rohr 46 wirkt als Verstärker für den Sender 44, der aus zwei gegensätzlich gepolten Piezo-Platten besteht. Oberhalb der Piezo-Platten für den Sender 44 ist ein Empfänger 45 angeordnet, der an seiner oberen Stirnseite von dem oberen Druckstempel 42 abgeschlossen wird. Der gesamte, aus Druckstempel 42, Empfänger 45, Sender 44 und Druckstempel 43 bestehende, Körper 41 hat kreiszylindrische Form.

Jede Piezo-Platte ist mit einer Elektrodenschicht aus Silber beschichtet. Die Platten bestehen aus Sinderplatten, die bis zur Küri-Temperatur erhitzt werden und unter großem Druck in einem elektrischen Feld zusammengepresst werden, wodurch es zur Ausbildung der piezo-elektrischen Eigenschaften kommt.

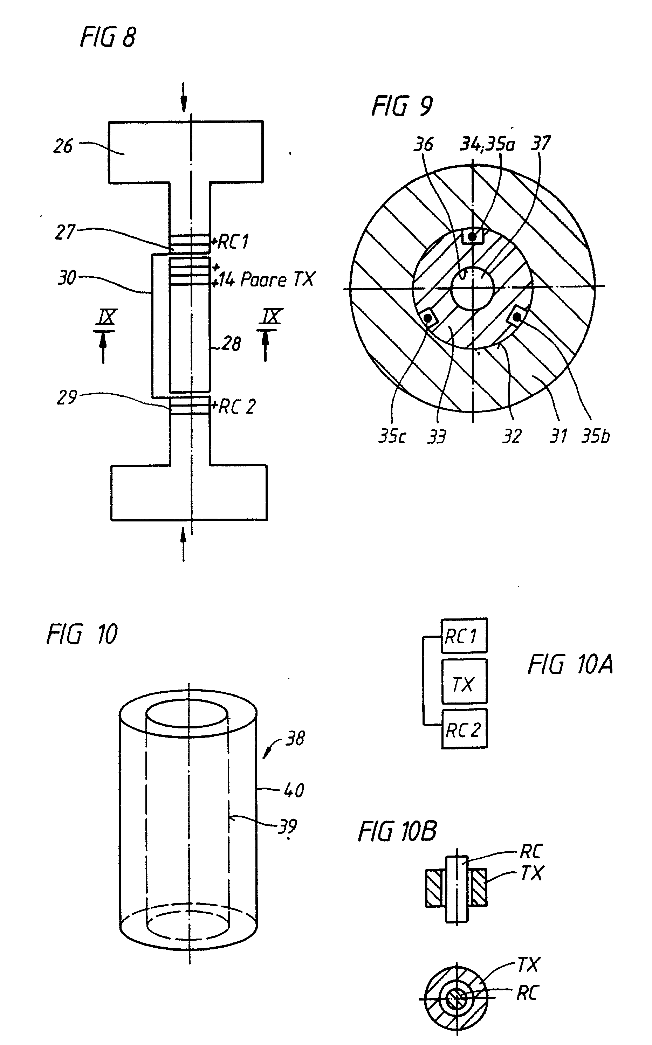

In Figur 8 ist ein weiteres Beispiel eines Sende-Empfängers dargestellt, der aus einer Stahlhantel 26 besteht, deren Mittelstück einen scheibenförmigen Aufbau aufweist. Der Empfänger 27 besteht hierbei aus übereinandergelegten, gegeneinander gepolten Platten in der vorher beschriebenen Weise, wobei der Sender 28 einen gleichartigen, scheibenförmigen Aufbau aufweist, und z.B. aus 14 Paaren von piezoelektrischen Scheiben besteht, die nach unten hin durch den zweiten Empfänger 29, der aus gleichfalls zwei Scheiben besteht, abgeschlossen ist. Der obere Empfänger 27 und der untere Empfänger 29 sind durch ein Verbindungskabel 30 miteinander verbunden. Der gesamte scheibenförmige, übereinandergestapelte Aufbau von Sender und Empfängerscheiben 27,28,29 ist unter starkem, axialen Druck aufgrund der gegeneinander vorgespannten P-förmigen Endstücke der Stahlhantel 26 gegeneinander vorgespannt.

Figur 9 zeigt einen Schnitt durch den Sender 28, wobei man eine Piezo-Scheibe 31 in der Draufsicht erkennt, die eine innere Ausnehmung 32 aufweist, in die ein Isolationsrohr 33 eingesetzt ist, welches am Umfang verteilt Nuten 34 aufweist, in welche die Lötzungen 35 der Kontaktplatten zwischen den Piezo-Scheiben 31 hineinragen. Die Lötzungen 35a sind beispielsweise die positiven Verbindungspunkte für den Sender, die Lötzungen 35b die positiven Verbindungspunkte für den Empfänger 29 und die Lötpunkte 35c sind die zusammengefassten Masseanschlüsse. Das Isolationsrohr 33 weist eine innere Ausnehmung 36 auf, in welche die Vorspannschraube 37 eingreift, welche die beiden T-förmigen Endstücke der Stahlhantel 26 gegeneinander vorspannt. Mit dieser Vorspannschraube 37 werden also die T-Stücke der Stahlhantel 26 gegeneinander verschraubt, so daß die dazwischen angeordneten stabförmigen Elemente des Senders und Empfängers 27,28,29 unter hohem Druck zusammengepresst werden.

Der Sender nach Figur 8 und 9 gibt bevorzugt eine axiale Strahlung ab, während der Sender nach Figur 10 eine bevorzugt radiale Abstrahlrichtung aufweist. In Figur 10 ist ein zylinderförmiges Element 38 gezeigt, was einem scheibenförmigen Element nach Figur 9 für einen Sender oder einen Empfänger entspricht. In Analogie zu dem in Figur 8 und Figur 9 gezeigten Aufbau ist es daher möglich, mehrere rohrförmige Elemente 38 so ineinander zu stecken und miteinander zu verbinden, daß sich ein analoger Aufbau zu Figur 8 und Figur 9 ergibt. Bei jedem Element 38 ist eine innere Beschichtung 39 und eine äußere Beschichtung 40 angebracht. Die Beschichtung besteht wiederum als Silber. Während bei dem Element 38 nach Figur 10 als die inneren und äußeren Mantelflächen des Elements beschichtet sind, sind es bei der Ausführung nach Figur 8 und 9 die Stirnflächen der verschiedenen, einander zugeordneten Piezoscheiben 31.

In gleicher Weise, wie nach Figur 8 die scheibenförmigen Elemente übereinandergestapelt sind, ist es nach Figur 10 möglich, die zylinderförmigen Elemente 38 stabförmig übereinander zu stapeln und die einander zugeordnete Beschichtung 39,40 elektrisch anzuregen, so daß es zu einer Dickenänderung des Elementes 38 kommt und sich hieraus vorzugsweise eine radiale Abstrahlung des Sendesignals ergibt.

Nach Figur 10a kann dabei ein Sender Tx mit zwei Empfängern Rc1 und Rc2 stabförmig übereinander gesteckt werden, oder nach Figur 10b kann auch eine solche Anordnung ineinander gesteckt werden, wobei der zylindrische Empfänger Rc in den lichten Querschnitt eines größer ausgebildeten zylinderförmigen Senders Tx eingesteckt ist. Der untere Teil der Darstellung in Figur 10b zeigt den Schnitt durch die Anordnung im oberen Teil der Figur 10b.

Mit sämtlichen Ausführungsformen der beschriebenen Sende-Empfänger-Schaltungenkann zusätzlich eine Potentialmessung im Bohrloch verbunden werden. Die Meßsonde ist in Richtung zum Spülmedium hin von einer isolierenden Gummihülse abgedeckt und auf der Außenseite dieser Manschette kann man eine Platin-Elektrode, Eisen-Elektrode oder eine Elektrode mit ähnlich leitfähigem Material wickeln, wobei das Potential von dieser Elektrode abgegriffen wird und als Gegen-Potential das Gehäuse der Meßsonde 1 oder die Verrohrung des Bohrloches 2 verwendet wird.

Ebenso ist die Verwendung einer im Erdboden eingegrabenen Platte als Gegen-Elektrode möglich.

## Ansprüche

1. Akustische Meßvorrichtung zur Untersuchung der Permeabilität und Klüftigkeit von Gesteinen im durchteuften Gebirge, insbesondere im Bereich eines Bohrloches, eines Tunnels, Stollens oder dergleichen, bestehend aus einer Meßsonde, die über ein Kabel in das mit einem Spülmedium gefüllte Bohrloch eingetaucht ist und in axialer Richtung dort verschiebbar ist, wobei die Meßsonde einen Impulse aussendenden Sender enthält, dessen an der Bohrlochwandung und im umliegenden Gestein erzeugten Echosignale von einem in der Meßsonde gleichfalls angeordneten Empfänger erfasst und als elektrische Signale über das Kabel zu einem an der Oberfläche angeordneten Meßwagen geleitet werden, **dadurch gekennzeichnet**, daß der Abstand zwischen Sender (5,28) und Empfänger (6,27,29) effektiv null ist, wobei eine Nullspreizung mit einer Obergrenze von nicht mehr als der halben Wellenlänge des im Spülmedium gesendeten Signals vorliegt, mit einer axialen Strahlenrichtung und einer Frequenz unter 10 kHz.

2. Meßvorrichtung nach Anspruch 1, **dadurch gekennzeichnet**, daß in der Meßsonde (1) ein oder mehrere Potentialelektroden angeordnet sind, die ebenfalls symmetrisch zu dem gleichen Sonden-Nullpunkt von Sender (5,28) und Empfänger (6,27,29) angeordnet sind.

3. Meßvorrichtung nach Anspruch 1, **dadurch gekennzeichnet**, daß mehrere Sender (5,28) und Empfänger (6,27,29) mit verschiedenen geometrischen Vorzugsrichtungen ihrer Empfindlichkeit in der Meßsonde zusammengefasst angeordnet sind.

4. Meßvorrichtung nach Anspruch 1 oder 3, **dadurch gekennzeichnet**, daß die Meßsonde (1) aus einem zylindrischen Körper (41) besteht, dessen Stirnseiten von jeweils einem scheibenförmigen Druckstempel (42,43) gebildet ist, daß die Druckstempel (32,42) in axialer Richtung gegeneinander verspannt sind und zwischen sich einen rohrförmigen Empfänger (45) und einen aus zwei gegensätzlich polarisierten Piezo-Platten bestehenden Sender (46) einschließen und daß an dem Druckstempel (43), der dem Sender (46) zugeordnet ist, ein Rohr (46) ansetzt, dessen vordere Stirnseite (47) offen ist.

5. Meßvorrichtung nach Anspruch 1 oder 3, **dadurch gekennzeichnet**, daß die Meßsonde (1) aus einem hantelförmigen Körper (26) besteht, dessen Mittenabschnitt aus scheibenförmigen, übereinander gelegten und axial gegen die Endabschnitte des Körpers vorgespannten Plattenabschnitten besteht, wobei ein aus mehreren gegensätzlich polarisierten Plattenpaaren bestehender Sender (28) jeweils an seinen Stirnseiten durch aus gleichfalls gegensätzlich polarisierten Plattenpaaren bestehenden Empfängern (27,29) abgeschlossen ist.

6. Meßvorrichtung nach Anspruch 1, **dadurch gekennzeichnet,** daß zur direkten Anregung und Registrierung von Rohrwellen Axialschwinger mit einer Frequenz unter 10 kHz verwendbar sind, deren Nutzwellenlänge im Spülmedium etwa gleich oder größer als der Bohrlochdurchmesser ist.

7. Meßvorrichtung nach Anspruch 6, **dadurch gekennzeichnet**, daß die Registrierzeit für die empfangenen Wellenzüge bis zu der Dauer von 1 Sekunde beträgt.

## Claims

1. An acoustic measuring device for investigation of the permeability and fissuration of rocks in bored mountains, in particular in the area of a borehole, a tunnel, drift or the like, comprising a measuring probe which is submerged by means of a cable into the borehole filled with a flushing fluid and is displaceable therein in the axial direction, wherein the measuring probe contains a transmitter emitting pulses, of which the echo signals generated on the borehole wall and in the surrounding rock are picked up by a receiver which is likewise situated in the measuring probe and conducted in the form of electrical signals via the cable to a measuring vehicle positioned on the surface, characterised in that the distance between the transmitter (5,28) and the receiver (6,2,29) is effectively nil, there being zero spread with an upper limit of no more than half the wavelength of the signal transmitted in the flushing fluid, with an axial beam direction and a frequency lower than 10 kHz.

2. A measuring device according to claim 1, characterised in that one or more potential electrodes, which are also arranged symmetrically to the identical probe zero point of the transmitter (5,28) and receiver (6,27,29), are arranged in the measuring probe (1).

3. A measuring device according to claim 1, characterised in that several transmitters (5,28) and receivers (6,27,29) having different preferential geometrical orientations in respect of their responsiveness, are arranged in combination in the measuring probe.

4. A measuring device according to claim 1 or 3, characterised in that the measuring probe (1) comprises a cylindrical body (41) the end faces of which are formed by a disc-shaped compression ram (42,43), that the compression rams (32,42) are braced with respect to one another in the axial direction and between them include a tubular receiver (45) and a transmitter (46) formed by two oppositely polarised piezo plates and that a tube (46) of which the front end face (47) is open is attached to the pressure ram (43) which is associated with the transmitter (46).

5. A measuring device according to claim 1 or 3, characterised in that the measuring probe (1) comprises a dumb-bell-shaped body (26) of which the central portion is formed by disc-shaped plate sections placed one upon another and prestressed axially against the terminal sections of the body, a transmitter (28) comprising several oppositely polarised plate pairs being delimited at each of its end faces by receivers (27,29) which also comprise oppositely polarised plate pairs.

6. A measuring device according to claim 1, characterised in that axial oscillators having a lower frequency than 10 kHz, of which the usable wavelength in the flushing fluid is approximately equal to or greater than the borehole diameter, may be used for direct excitation and recording of cylindrical waves.

7. A measuring device according to claim 6, characterised in that the recording period for the wavetrains received amounts to a duration of up to 1 second.

**Revendications**

1. Dispositif de mesure acoustique pour analyser la perméabilité et la fissuration de formations rocheuses dans les montagnes traversées par forage, notamment dans la zone d'un trou de forage, d'un tunnel, d'une galerie, etc, comportant une sonde de mesure plongée par l'intermédiaire d'un câble dans le trou de forage rempli d'un agent de lavage et apte à être déplacée dans ledit trou dans le sens axial, ladite sonde de mesure contenant un émetteur émettant des impulsions dont les signaux d'écho produits sur la paroi du trou de forage et dans la roche environnante sont enregistrés par un récepteur disposé également dans la sonde de mesure, et transmis sous forme de signaux électriques, par l'intermédiaire du câble, à un véhicule de mesure placé en surface, caractérisé en ce que la distance entre l'émetteur (5, 28) et le récepteur (6, 27, 29) est effectivement nulle, leur écartement présentant une limite supérieure qui ne dépasse pas la moitié de la longueur d'onde du signal émis dans l'agent de lavage, dont le sens de rayonnement est axial et la fréquence inférieure à 10 kHz.

2. Dispositif de mesure selon la revendication 1, caractérisé en ce qu'il est prévu dans la sonde de mesure (1) une ou plusieurs électrodes de potentiel qui sont également disposées symétriquement par rapport au même point zéro de l'émetteur (5, 28) et du récepteur (6, 27, 29).

3. Dispositif de mesure selon la revendication 1, caractérisé en ce que plusieurs émetteurs (5, 28) et récepteurs (6, 27, 29) présentant des sensibilités de directions géométriques préférées différentes sont réunis dans la sonde de mesure.

4. Dispositif de mesure selon la revendication 1 ou 3, caractérisé en ce que la sonde de mesure (1) se compose d'un corps cylindrique (41) dont les faces frontales sont formées chacune par un élément de pression (42, 43) en forme de disque, en ce que les éléments de pression (32, 42) sont précontraints l'un contre l'autre dans le sens axial et renferment entre eux un récepteur tubulaire (45) et un émetteur (46) composé de deux plaques piézo-électriques de polarisations contraires, et en ce qu'il est prévu au niveau de l'élément de pression (43) affecté à l'émetteur (46) un tube (46) dont la face frontale avant (47) est ouverte.

5. Dispositif de mesure selon la revendication 1 ou 3, caractérisé en ce que la sonde de mesure (1) se compose d'un corps (26) en forme d'haltère dont la section médiane est formée de sections de plaques en forme de disques, superposées et précontraintes axialement à l'encontre des sections d'extrémités du corps, un émetteur (28) composé de plusieurs paires de plaques de polarisations contraires étant fermé respectivement au niveau de ses faces frontales par des récepteurs (27, 29) formés de paires de plaques de polarisations contraires.

6. Dispositif de mesure selon la revendication 1, caractérisé en ce que des oscillateurs axiaux d'une fréquence inférieure à 10 kHz peuvent être utilisés en vue d'une stimulation et d'un enregistrement directs d'ondes tubulaires, lesdits oscillateurs présentant dans l'agent de lavage une longueur d'ondes utile à peu près égale ou supérieure au diamètre du trou de forage.

7. Dispositif de mesure selon la revendication 6, caractérisé en ce que le temps d'enregistrement pour les séries d'ondes reçues va jusqu'à une durée d'une seconde.

EP 0 154 821 B1

FIG 1

12

FIG 2

FIG 3

FIG 4

Amplitude

48    49    50    51    52

Laufzeit

FIG 5.1

5,6

FIG 5.2

+  −  +  −  +

5  6

FIG 5.3

−  +  −  +  −  +  −

5  6

FIG 5.4

+  −  +  −

6
5

15

# FIG 6

# FIG 7

FIG 8

26
27 +RC1
30 +14 Paare TX
IX IX
28
29 +RC 2

FIG 9

36  34;35a  37

35c  33  32  31  35b

FIG 10

38
40
39

FIG 10A

RC 1
TX
RC 2

FIG 10B

RC
TX

TX
RC